# EUROPEAN PATENT APPLICATION

(11) **EP 1 511 277 A1**
(43) Date of publication of application: **02.03.2005**
(21) Application number: 03019750.3
(22) Date of filing: 29.08.2003
(51) Int. Cl.: H04M 1/27, H04M 1/64, G10L 15/22

(54) **Method for answering an incoming event with a phone device, and adapted phone device**

(71) Applicant: Swisscom AG, 3050 Bern (CH)
(72) Inventor: van Kommer, Robert, CH-1752 Villards-sur-Glane (CH)
(74) Representative: P&TS Patents & Technology Surveys SA

(57) **Abstract**

Method for answering an incoming event, such as an incoming phone call, with a phone device (2), comprising:
said phone device (2) produces a signal for announcing the incoming event (280),
a called user (3) in the vicinity of said phone device speaks a voice command in order to handle the event (282),
an ambient microphone (28) in said phone device (2) records said voice command,
a speaker verification system (26) checks the identity of said called person (3) using said voice command (284),
a voice recognition system (26) recognises said voice command (284),
said voice command is executed (290) if the identity of said phone device user (3) has been positively verified and if said voice command has been correctly recognised.

## Description

The present invention concerns a method for answering incoming events, such as phone calls, with a phone device, and an adapted phone device.

Incoming phone calls are traditionally announced with an audio and/or visual signal produced by the called phone device. At the same time, a switch in the network sends a series of ring-back signals to the caller to let him know that the call is being placed. The call is then taken, and the connection established, when a person in the vicinity of the called phone device sizes the handset or selects a connexion key on it. Similarly, incoming messages, such as SMS or MMS messages, are often announced with a beep and displayed on a display. Other incoming events may be generated by the phone device itself, such as alarms set in the agenda or by the scheduler, and announced in a similar way.

US5850435 describes a method to audibly announce identified callers. The called phone device comprises a database of callers including a recorded identification for each registered caller. When a call is received, the phone device identifies the caller and, if the caller is found in the database, his name is audibly announced using the available audio record. This allows the caller to screen the incoming calls. Furthermore, if the called device is shared by several users in the same room, the caller name announcement gives the users useful information for deciding who should take the phone call.

Other phone devices that can audibly announce the caller's name are described among others in DE19543040, US5604790, WO2000222801, US5349638, US4720848, US6373925, EP1231762, US20020196914, EP1069750 and WO9615611.

In most devices, the called user still needs to physically pick up the phone to answer, reject or redirect the call. The phone device described in US5850435 is improved over this prior art in that the call can be accepted or rejected with a voice command, for example with a spoken option number.

However, the voice-commanded phone of US5850435 provides no security to prevent unauthorised users from using them and for answering calls. Users do not need to identify themselves to answer an incoming call; in fact, anybody in the vicinity of the called phone device can accept the call by speaking the requested voice command. This is especially annoying if third parties have access to the phone device, or when several phone devices are used by several users in a common room. In this case, it may frequently happen that a communication is established with a person different than the expected one, which may lead to confidentiality concerns.

It is therefore an aim of the present invention to provide a safer, more secure method and device for taking incoming voice calls with voice commands.

Another aim of the present invention is to provide a safer, more secure method and device for handling incoming data messages with voice commands.

Another aim of the present invention is to provide a safer, more secure method and device for handling incoming events that are generated by the phone device with voice commands.

Another aim of the present invention is to provide a method and device for handling incoming events with a voice command that is also adapted to a use in rooms with a plurality of phone devices and users.

In accordance with one embodiment of the present invention, a method for answering an incoming event with a phone device comprises the following steps:
the phone device produces a signal for announcing the incoming event,
a phone device user in the vicinity of said phone device speaks a voice command in order to handle the event,
an ambient microphone in said phone device records said voice command,
a speaker verification system in said phone device checks the identity of said phone device user using said voice command,
a voice recognition system in said phone device recognises said voice command,
said voice command is executed only if the identity of said phone device user has been positively verified and if said voice command has been correctly recognised.

This has the advantage that only users who have been positively authenticated with their voice are able to enter valid voice commands. Thus, a high level of safety and confidentiality may be ensured.

In a preferred embodiment, the signal for announcing the incoming event is an audio signal indicating the identity of the caller, calling device, or generator of the event.

In an embodiment, the signal for announcing the incoming event is produced only if the phone device has detected that the phone device user is in the vicinity.

In a preferred embodiment, different phone device users are allowed to answer different calls. For example, a first phone device user may be allowed to answer calls and to view messages from a first set of callers, and a second user of the same phone device is only allowed to answer calls and to view messages from a second set of callers. This makes it possible to maintain a higher confidentiality among users sharing the same phone device.

In a preferred embodiment, each phone device has an individual identification. The voice commands include this identification for identifying the phone device to be activated among several devices that may be present in the same room. The identification may be a name determined by the user, or by each user,of the phone device.

### Brief description of the drawings

The invention will be described with reference to the following drawings wherein:
Fig. 1 shows a schematised representation of a possible telephony system with a phone device according to the invention.
Figure 2 is a flowchart illustrating the operation of the phone device 2 or phone agent.

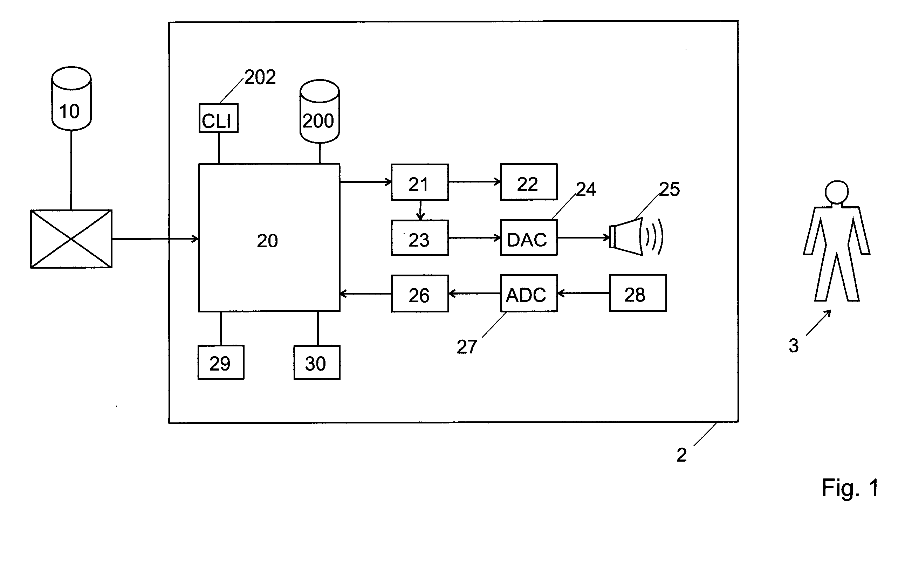

An example of voice commanded phone device according to the invention is shown with reference number 2 on Figure 1. The phone device 2 is connected to a switch 1 in a public telephone network, through which voice and data calls can be established with other remote phone devices and equipments. The switch 1 comprises or has access to a subscriber directory 10 that indicates the phone number, name and address of each subscriber of the telephone network. The phone device 2 may be used by one or several users (called persons or callers) 3 in the vicinity.

The phone device 2 may be a wireless, POTS, ISDN, WLAN- or IP phone device built around a standard, programmable phone part or module 20 for connecting the device 2 to the telephone network and for providing basic phone functions, such as establishing and answering phone calls. In a GSM wireless system, the phone part 20 comprises for example at least a radio-frequency module with an antenna, a GSM module, a SIM-card, a keypad (possibly comprising software buttons), a mouth microphone, a loudspeaker or earphone, and a microcontroller for storing and executing software. In an embodiment, the device 2 has no keypad, or only one or two buttons, software buttons, or similar control elements, and is controlled mainly by voice commands, as will be explained later. The phone device 2 preferably further comprises a display 22 and a wireless local interface such as, for example an infrared IrdA, a Bluetooth or a Wifi interface, for establishing a direct local connection with devices in the vicinity, such as other phone devices, headsets, PDAs, computers, printers, and the like. The phone device is preferably multimodal, in the sense that it can communicate with other devices using the voice and the keypad/display; even simultaneous transmission of voice and text or data is preferably possible.

An agenda, time and/or scheduler module 30 is preferably available as a software program run by the microprocessor in order to record contacts, tasks, delays, meetings, and the like. Other software modules that may generate events include for example games, network games, instant messaging programs, and so on. As the phone device 2 may lack a keypad, it can be integrated in a body-worn casing, for example in a wristwatch, earring or other piece of jewellery. The phone device may also be split into two devices, such as the phone and a headset linked via a Bluetooth network connection.

A caller or calling device identification module 202 is preferably provided for determining the identity of the caller or of the calling phone device, or of the sender of a data message. In an ISDN or GSM phone system, this feature may be provided with standardised CLI (Caller Line Identifications) functions. In a voice-over-IP (VoIP) phone system, the name or Internet address of the sender of voice IP packets may be received by the device 2 and used for identifying the calling device. A directory 200 in the phone device (for example in the SIM-card or in the phone equipment) indicates for at least some calling numbers a corresponding name. If the directory 200 is not available, or if a received number is not available in this directory, the network-based directory 10 may be used for finding a name corresponding to received identifications or numbers.

The phone device 2 of the invention preferably comprises, or has access to, a text generator for generating text messages in relation to internal or external events such as, for example, inbound calls. The generated messages can be displayed on the display 22 and sent to a local or remote text-to-speech converter 23 that converts the messages to a natural voice message using known speech synthesis technology. The speaker voice used by the text-to-speech converter 23, and/or the emotion carried by this voice, may depend on the type and content of the spoken message. For example, if the spoken text is an announcement of an incoming event, for example a call or a message, the voice and emotion used may depend on the calling user or device. The user 3 may also teach a new voice to the converter 23, for example by copying the voice from an audio extract spoken by a celebrity or by a relative.

The voice message generated by the text-to-speech converter 23 is converted into an analog signal by the digital-to-analog (DAC) converter 24 that drives over an amplifier (not shown) a loudspeaker 25, preferably an ambient loudspeaker.

The phone device 2 further preferably comprises an ambient microphone 28 for capturing voice commands or voice signals spoken by users 3 in the non-immediate vicinity of the phone device 2, for example users in the same room. Analog audio signals recorded by the microphone 28 are converted into digital audio signals by an analog-to-digital converter 27. The converted digital signals are forwarded to a local or remote speech analysis module 26 that performs speech recognition and speaker verification and/or identification tasks. The speech analysis module 26 preferably uses neural networks, hidden Markov models or hybrid techniques for those tasks and can preferably process natural language. As each device 2 will only be used by a limited number of users 3, an adaptive speech recognition method will preferably be used. The text outputted by the module 26 is delivered to a software module including a dialogue manager. This software module, as well as the text-to-speech converter 23 and the speech analysis module 26, may comprise software portions stored and executed in the phone device 2, and/or remote software agents stored and executed by remote servers in the telephone network.

The phone device 2 interacts with the user 3 mainly with voice command inputs and with speech synthesized outputs. A bi-directional voice interaction between the device 2 and the user 3 may occur during, and even outside, actual voice and data communication with remote users. Accordingly, the phone device 2 preferably continuously listens to voice commands that may be received by the ambient microphone 22 or by a non-illustrated mouth microphone.

Correspondingly, the phone device 2 has preferably at least three different states:
> Stand-by state. In this state, the phone device is deactivated in order to reduce the power consumption. It may be activated with buttons or software buttons (if some buttons are available), or by internal or external events such as incoming calls, incoming messages, other phone events, agenda 30 or scheduler related events, alarm events, and so on. In an embodiment, a part of the voice recognition system 26 sufficient for recognizing voice commands spoken by a user 3 is maintained active in this stand-by mode (in at least one stand-by-modes if several are available), so that the phone device may be activated from stand-by mode by voice commands spoken by a user 3. The phone device may also be deactivated, or set back in stand-by mode, by various events such as keypad commands, explicit deactivating orders, default termination of command sequences, time-out events, scheduler events, security events (for example three unsuccessful authentications), etc.
> Listening state: in this state, the phone device is listening to the users 3 during and outside voice calls, but does not actively participate. It waits for voice commands, constantly improves the users' phone and language models, and determines the user's mood.
> Active state: in this state, the phone device may actively speak to the user 3 and/or to remote calling user.

The phone device user can preferably retrieve the current state of his phone device with a dedicated voice command ("spoken ping command"), such as for instance *"Can you hear me?"* or *"Are you listening?".* The phone device 2 answers this command by indicating its current state and/or the reliability of the speech recognition process, for example by saying over the loudspeaker "*Hallo John, I am listening to you*, *but it's very noisy here, I have problems understanding you".*

Several voice-activated phone devices 2 may be available in a same room. According to another feature of the invention, each phone device carries a personal identification, for example a name, number or nickname, in order to distinguish it from other phone devices and to allow it to recognise voice commands it has to execute from commands intended for other devices. The name is preferably defined by the administrating user of the device using a dedicated voice command, keypad command, or over another channel such as for example Internet. In the following part of the description, we will suppose that the illustrated phone device 2 answers to the name "*Mickey*". In this case, voice commands have to start by or include an excapt sequence including the name of the phone device, in order to be accepted by the phone device. Examples of accepted voice commands could be *"Mickey, give me the 032-7249660*" or *"Mickey, please take the incoming call*". In a preferred embodiment, commands in a natural language are recognised and accepted, although standardised voice commands such as for example "*1*" to answer a call, "*2*" to divert it, etc., may be easier to recognise in a less powerful embodiment.

Before accepting a command, the speaker verification system in the module 26 checks the identity of the user speaking the order using a stored voice signature of the authorised user or users. Thus, only orders from authorised and positively verified users will be executed. The device also preferably checks if a valid device identification has been used; the phone device name thus acts as a supplementary password.

In a less secure embodiment, speaker verification is only performed for activating the device and for security or confidentiality critical orders.

If several users 3 are allowed to share a same voice-activated phone device 2, they may use the same name to address the phone, or adopt different names. Furthermore, different rights may be given to different users, so that different sets of commands or command parameters will be accepted depending on the user. For example, only users with administrating rights are allowed to change some phone device settings; inbound or outbound calls or messages from, respectively to, some numbers or lists of numbers may be restricted for some users. Events from the agenda, time, scheduler or from games will only be spoken if the concerned user is present and has accepted the task to be spoken over the loudspeaker.

The phone device 2 preferably comprises or access to a software code for perceiving the state of his user or of each user 3. This state is determined by voice commands spoken by the users, such as for example *"Mickey, I am tired, please redirect all incoming calls to my voice mail system*" or "*Mickey*, *I only want to receive important calls from my boss, please do not pass other calls, just announce them on your display.* ". The state can also be determined by listening to the users 3 during the calls and between calls, by the users' agenda in order for example to avoid any disturbance during a meeting, by the time and date (only important calls during the night, no professional calls during the week end), by the history of previous calls, by the location of the device 2, etc. Like a voice-operated tamagotchi, the phone device 2 may also spontaneously ask his user, or one of his users, for his state and mood. The knowledge of his user's mood and state is used by the phone device for proactively deciding what appropriate behaviour the user is likely to have. For example, the phone device 2 may decide on its own to automatically direct incoming calls to a voice mail system when the called user is in a meeting, or during the night when the user 3 does not speak and is likely to sleep, or when the user has already received many calls and is likely to prefer working than rather than answering calls. The phone device may also decide if an event in the agenda or scheduler, for instance, should be announced vocally or only on its display.

The software code and the parameters that determine the behaviour of the phone device are preferably stored and/or run in the phone device itself, in a chipcard or other identifying device connected to the phone device 2, or as a user's personal software agent stored and run stored in the telephone network. In an embodiment, this behaviour is not linked to a particular phone device; a user may then identify himself with any voice-enabled phone device 2 in the network to have the network automatically direct incoming calls to this device, to bill outbound calls from this device to the user, and to have this phone device adopt the expected user-dependant behaviour.

The phone device, or a software agent, preferably also learns the habits and behaviour of the callers calling the user 3, and of the called users. This knowledge may be gained by listening to phone talks and detecting, for example, that a specific caller usually requests to speak to one of the several users of the device. This knowledge is used to adapt the voice announcement of the incoming calls. For example, the phone device may announce an incoming call by saying *"Patricia is calling, she probably wants to speak to you*, *Caroline* "*.* The phone device may even forbid anyone else than user Caroline to answer this call, to open a message from Patricia, or to play a network game against Patricia.

As the user is reliably authenticated using the user's biometric voice signature, the phone device can be used as a safe terminal for e-payment transactions. Voice payment commands may be spoken by a user, such as "*Mickey*, *can you please pay immediately 30 Swiss francs from my SIM card account to the bookshop XY*", whereas the bank account of the bookshop XY is retrieved by the phone device 2 from the internal directory 200, from the network-based directory 10 or directly from the bookshop over a local wireless connection established through the interface 29. Other identification means, such as a password, PIN or other biometric signatures, may be requested by the phone device in order for the transaction to be accepted, whereas a request for a supplementary identification may depend on the user 3, on the amount to be paid, on the user's location, and/or on the reliability with which the speaker is authenticated. The payment itself can occur over the local wireless interface 29 or over the telephone network.

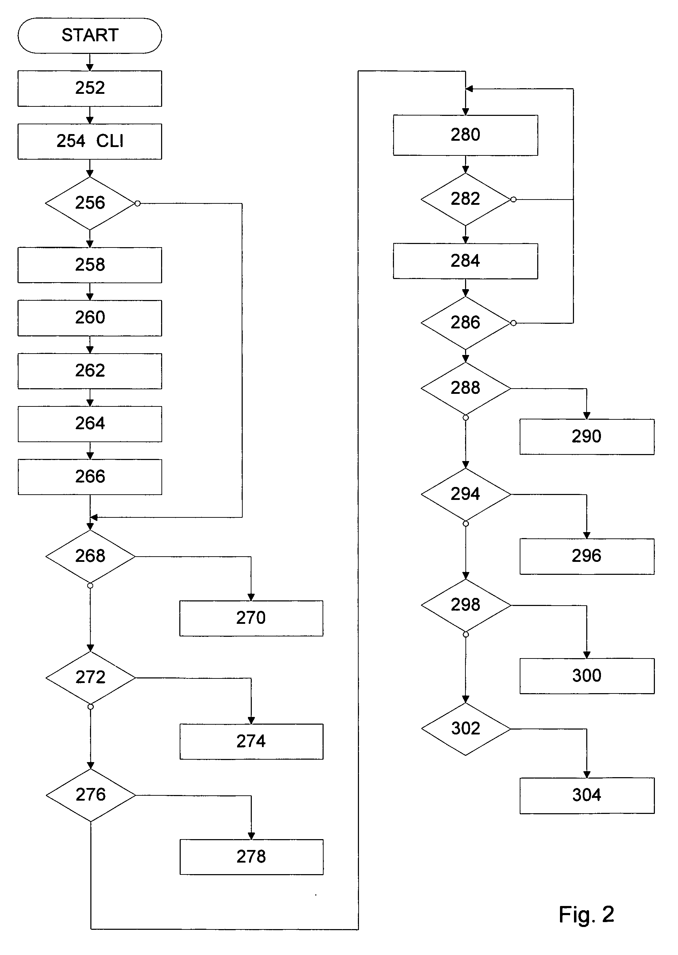

Figure 2 is a flowchart illustrating the operation of the phone device 2 (or phone agent if some functions are performed by a software agent) during incoming events, in this example calls, which uses the above described specially fabricated hardware and/or software in the user's equipment and/or in the telephone network. Step 250 designates the start of the process; during this step, the phone device may be in stand-by mode or in listening mode. At step 252, an incoming event such as a phone call, email, SMS, MMS, fax, device-generated event, etc. arrives. The phone device, or the software agent, identifies the calling device during step 254, using one of the above described known caller identification methods. If the name of the calling party has not been identified, for example because the calling party has concealed the CLI feature in an ISDN network, the caller will be determined at step 258, or the call will simply be announced as anonymous. If the event is generated by the phone device itself, the procedure at step 254 simply indicates the name of the responsible program or process.

At lozenge 256, the phone device 2 (or the related software agent) checks if it should take the incoming call or message even before announcing it to the phone device user 3. This decision may depend for example on user's 3 settings, on user's 3 mood and availability, on the identity of the caller, on the time, date, and weekday, and so on. If the result of test 256 is positive, the software executes steps 258 to 266, otherwise it goes directly to step 268.

At step 258, the phone device asks the caller who he is, or identifies a specific caller with his voice among several users sharing the same caller identification. The dialogue, the voice and/or the words used by the phone device (2) while taking the incoming call preferably depend on the identified caller or calling device; different greetings may be provided for private, professional or anonymous calls.

At step 260, the device 2 asks the caller whom he wants to speak to, or determines it using history of previous calls. At step 262, it asks or determines how urgent the call is, and at step 264 it asks or determines how important the call is. Those steps may be omitted if the phone device or agent knows for example that all incoming calls from some VIP callers are important.

Depending on the result of those tests and on the privileges of the caller, the phone device 2 may during step 266 answer some calls instead of the caller 3. For example, a phone device nicknamed Mickey may answer the following question from a remote caller: *"Mickey, could you tell me where user John is?*"

At step 268, the phone device or agent 2 checks if the incoming call or message should be rejected (step 270); this decision may depends on the identity of the caller, on the agenda of the phone device user, on the importance and urgency of the call (whereas automatic spam detection algorithms may be used), on specific or implicit previous commands of the user 3, on the date, time and weekday, etc.

If the call is not rejected, the phone device or agent 2 checks at step 272 if the incoming call or message should be diverted to another destination (step 274). The destination address may be specified by the user 3 or determined by the device 2. This decision may depend on of criteria similar to those used for deciding if a call should be rejected.

If the call is not rejected nor diverted, the phone device/agent checks at step 276 if the incoming call should be routed to a voice mail system (step 278) specified by the user 3, or by one of the users if several users share the device 2.

If the call has not been rejected or diverted, the phone device 2 warns the user during step 280 that a phone call, email, SMS, MMS, fax, etc. has arrived. This announcement is made by audibly speaking the name of the calling party between, or instead of, phone rings. The announcement, or at least some announcements, may also be displayed by the phone device. The phone device thus tells the user that the caller is likely to want to reach him and asks the user how it should handle the call.

The phone device 2 can also perform simultaneously the voice communication over the telephone network with the remote caller, and a second voice communication with the called user 3 over the ambient loudspeakers and microphones 25, 28. In the case for example of an intelligent network or SIP-operated or VoIP-enabled phone device and network, the phone device 2 may also answer several phone calls simultaneously.

When the phone device announces the call to the wanted user 3, it uses language and acoustic models preferred by this user, for example a selected voice, emotion, and wording. Those settings, which may be stored in the phone device or in a remote server, may also depend on the caller; for example, the phone device may use the caller's voice learned from previous calls to announce a call.

In order to handle the incoming call, the user 3 in the vicinity of the phone device has to speak a voice command, such has for instance "*Mickey, please take this call*" or "*Mickey, please answer this event yourself*". The phone device/agent waits during step 282 for this answer. This command is recorded by the ambient microphone 28 and recognised at step 284 by the speech recognition system 26. The speech recognition system 26 also checks during step 284, or at a different time, the identity of the user 3 speaking the command. The voice command is executed only if the expected user has been recognised with reliability higher than a predefined threshold (test 286). If the user 3 is not reliably recognised, the command is not executed, or supplementary authentication is required, such as for example with a spoken or entered pin code or password. The call is thus only answered if the identity of the phone device user 3 has been positively recognised and if the voice command has been correctly recognised. A speaker verification can be performed at the beginning of each voice session or preferably for each voice command.

The voice command decoded by the speech analysis module 26 during step 284 acts on in one of the four illustrated paths. Other voice commands and actions are possible in the frame of the invention.

Path 288-292 handles the lift up command to take the incoming call or message immediately. If a lift up command is recognised at step 288, the call is taken at step 290 and a voice communication is established at step 290 between the remote caller and the called user 3 using the ambient microphone and loudspeaker. The incoming call process is terminated at step 292.Path 294-296 handles the reject command to reject the incoming call. If a reject command is recognised at step 294, the call is rejected at step 296; the called user 3 may ask the phone device to let a message for the call, such as "*Mickey*, *tell him to call again later*" or "*Tell him we are not responsible for this kind of requests, he should call the company main number*"*.*

Path 298-300 handles the redirect command to redirect the incoming call or message to another predefined phone number or address. If a redirect command is recognised at step 298, the call is redirected at step 300; the called user 3 may also indicate the redirection number or address in his command.

Path 302-304 handles the voice mail command to redirect the incoming call to a voice mail system. If a voice mail command is recognised at step 300, the call is redirected at step 302.

The user 3 may also order his phone device 2 to put the call on hold, or to answer the call itself, or to speak a standard message, or to take the call and convert it to text, or to repeat the event from the agenda, etc.

Outbound calls are also performed with a voice command that is only executed when the user speaking the command has been positively recognised. However, some emergency phone numbers are preferably enabled even if the identity of the calling user 3 has not been verified. The voice command may contain a name from one of the directories 10 or 200, or a spoken or spelled phone number or address. Multiparty calls and conference calls can be set up with appropriate voice commands, such as for instance "*Mickey*, *please call John and Mary simultaneously*"*.*

Several phone devices 2 or code portions and user parameters may share their knowledge of user's habits and preferences, for example via a Web service. Furthermore, an access to a user profile may be performed over a web interface to allow a user to check and modify his preferences.

We will now describe an example of possible dialogue between a caller (Georges), a user (John) and the user's phone device (Mickey):

| | | |
|---|---|---|
| John | George | Mickey |
| Phone device user | Caller | Phone device |
| | | |
| John is currently in a business meeting with Robert | | |
| | George is calling John | |
| | | Mickey takes the incoming phone call and announces it to his user John: "*Hi John, George is calling you. Do you take his phone call?*" |
| | | Simultaneously, given that George belongs to John's professional body list, Mickey checks John scheduler and gives George some info about John's meeting: "*Good morning George, my name is Mickey, my owner John is currently in* a *meeting. Please wait*" |
| Given the level of importance of George's call, John decides to give him a personal voice message and to divert the call to the voice-mail: *Mickey, tell George the last joke in my personal joke's list, and store his eventual request, if he has some- thing urgent call me back* | | At this point John could take George's call without touching the phone, just by voice activating the call. However, John decides to switch George to his voice mail with a personal message. |
| | | Mickey is talking to George: *Hi George, John could not take you right now. However, if it is urgent, please say so otherwise I have a message for you, would you like to listen to it?* |
| | *Well*, *tell John that I wish to lunch with him at 12 o'clock and no, Mickey, I do not want to hear that message* | |
| | | *George, would you like me to set the rendezvous in John's agenda?* |
| | *Yes!* | |
| | | *Bye, thanks for calling* |

## Claims

1. Method for answering an incoming event with a phone device (2), comprising:
said phone device (2) produces a signal for announcing the incoming event (280),
a phone device user (3) in the vicinity of said phone device speaks a voice command in order to handle the event (282),
an ambient microphone (28) in said phone device (2) records said voice command,
a speaker verification system (26) checks the identity of said called person (3) using said voice command (284),
a voice recognition system (26) recognises said voice command (284),
said voice command is executed (290) only if the identity of said phone device user (3) has been positively verified and if said voice command has been correctly recognised.

2. The method of claim 1, said incoming event being an incoming phone call, said voice command being a call-handling voice command for handling said incoming phone call.

3. The method of claim 2, said call-handling voice command being a lift up command for taking said incoming call with said ambient microphone.

4. The method of claim 1, said incoming event being an incoming data message, said voice command being a command for handling said data message.

5. The method of claim 1, said incoming event being an event generated by an agenda, scheduler or time software in said phone device.

6. The method of one of the preceding claims, wherein different users (3) are allowed to handle incoming messages or calls from different callers.

7. The method of one of the claims 1 to 6, further comprising:
establishing a dialogue between a text-to-speech converter (23) and the caller (256-266)

8. The method of claim 7, wherein said dialogue is established before the announcement of said incoming event to said user (3).

9. The method of one of the claims 7 to 8, wherein said dialogue is performed during said call announcement (280).

10. The method of one of the claims 7 to 9, wherein said dialogue (258-266) is used for determining the identity of the caller and/or for asking the caller about the urgency or importance of his call.

11. The method of one of the claims 1 to 10, further comprising a step of identifying the caller or the calling device (254; 258), and wherein said signal is an audio announcement signal indicating said identity.

12. The method of claim 11, wherein said audio announcement signal is a voice signal synthesised by a text-to-speech converter (23) and announcing the identity of said caller or calling device.

13. The method of claim 12, wherein the voice and/or the words used for synthesising said audio announcement voice signal depends on the caller or calling device.

14. The method of one of the claims 12 or 13, wherein the voice and/or the words used for synthesising said audio announcement voice signal depends on said phone device user (3).

15. The method of one of the claims 1 to 14, wherein said command includes a phone device identification identifying the commanded phone device (2).

16. The method of claim 15, wherein said phone device identification includes a name specific to each individual phone device (2), said name being determined by the user of the phone device.

17. The method of one of the claims 1 to 16, further comprising:
said phone device user (3) in the vicinity of said phone device speaks a redirect voice command (298) in order to redirect the call,
said ambient microphone (28) in said phone device records said redirect voice command,
a speaker verification system (26) checks the identity of said phone device user using his voice,
a voice recognition system (26) recognises said redirect voice command (284),
said incoming call is redirected (300) if the identity of said phone device user (3) has been positively verified and if said redirect voice command has been correctly recognised.

18. The method of one of the claims 1 to 17, further comprising:
said phone device user (3) in the vicinity of said phone device (2) speaks a voice mail command in order to redirect the call to a voice mail system (302),
said ambient microphone (28) in said phone device records said voice mail command,
a speaker verification system (26) uses said voice mail command to check the identity of said phone device user,
a voice recognition system (26) recognises said voice mail command,
said incoming call is redirected to voice mail system if the identity of said phone device user (3) has been positively verified and if said voice mail command has been correctly recognised.

19. The method of one of the claims 1 to 18, further comprising:
said phone device user in the vicinity of said phone device (2) speaks a reject voice command in order to reject said incoming call (294),
said ambient microphone (28) in said phone device (2) records said reject voice command,
a voice recognition system (26) recognises said reject voice command,
said incoming call is rejected.

20. The method of one of the claims 1 to 19, further comprising a step of identifying the calling device in the infrastructure of the telephone network (254).

21. The method of one of the claims 1 to 20, further comprising a step of identifying the caller with a speaker identification system using a voice extract recorded prior to or during said announcement (258).

22. The method of one of the claims 1 to 21, further comprising:
between two calls, said phone device (2) determines the state of his user (3),
the reaction of said phone device to an incoming call depends on said user's state.

23. The method of claim 22, wherein said state is determined using at least one of the following parameters:
location of the device,
voice commands received between two calls,
agenda events,
alarm events,
user's answers to questions asked by said phone device,
audio events listened to by said phone device while in listening mode,
history of calls.

24. The method of one of the claims 1 to 23, further comprising a step of automatically determining the phone device user based on the identity of the caller or calling device (260).

25. The method of one of the claims 1 to 24, comprising a step where said phone device asks the identity of the caller.

26. The method of one of the claims 1 to 25, further comprising a step during which said phone device (2) automatically determines if said incoming event should be announced (268-276).

27. The method of claim 25, wherein said phone device (2) asks the caller about the importance of the call prior to deciding if the call should be announced (264).

28. The method of one of the claims 1 to 27, further comprising a registration step during which said user (3) registers himself with a registration voice command spoken to said phone device (2) in order to have incoming calls automatically redirected to said phone device.

29. The method of one of the claims 1 to 28, wherein at least some said steps are performed with a user agent in the infrastructure of the telephone network.

30. The method of one of the claims 1 to 29, further comprising a step where several phone devices share their knowledge of user's habits and preferences.

31. The method of one of the claims 1 to 30, comprising a step where said phone device (2) answers said incoming event before producing said signal for announcing it.

32. The method of claim 31, comprising a step where said phone device (2) takes said incoming call before producing said signal for announcing it.

33. The method of claim 32, wherein the voice and/or the words used by said phone device (2) while taking said incoming call depends on the caller or calling device.

34. The method of one of the claims 31 to 33, comprising a step where said phone device has a simultaneous voice interaction with several callers.

35. The method of one of the claims 1 to 34, comprising a step where said phone device has a simultaneous voice interaction with a caller and with said phone device user.

36. The method of one of the claims 1 to 35, further comprising:
between two calls, said user checks the state of said phone device with a dedicated voice command.

37. The method of claim 36, wherein said phone device (2) answers said dedicated voice command by indicating its current state and/or the reliability of the speech recognition process.

38. The method of one of the claims 1 to 37, further comprising a step of using said phone device (2) as an authenticated terminal for a transaction with a third party.

39. Phone device comprising:
a loudspeaker (25) for audibly announcing incoming events,
an ambient microphone (28) for recording voice commands spoken by a user (3) in the vicinity,
a speaker verification system (26) for verifying the identity of said user,
a voice recognition system (26) for recognizing said voice command,
a processing system (20) for executing said voice command when the identity of said user (3) has been positively verified and when said voice command has been correctly recognised.

40. The phone device of claim 39, further comprising caller or calling device identifying means (202) for identifying the caller or the calling device generating said incoming event

41. The phone device of one of the claims 39 or 40, further comprising text-to-speech conversion means for announcing said incoming call vocally to said user.

42. A computer program product comprising computer code portions for executing the method of one of the claims 1 to 39 when said computer code is run by a computer.

43. A computer program product comprising computer code portions for checking the identity of a user (3), for recognising voice commands spoken by said user (3), and for executing said voice command if the identity of said phone device user (3) has been positively verified and if said voice command has been correctly recognised.
